(19) Europäisches Patentamt
European Patent Office
Office européen des brevets

(11) Veröffentlichungsnummer: **0 321 872**
**A2**

(12) **EUROPÄISCHE PATENTANMELDUNG**

(21) Anmeldenummer: 88121074.4

(51) Int. Cl.⁴: **C08F 4/32 , C09D 3/74**

(22) Anmeldetag: 16.12.88

(30) Priorität: 19.12.87 DE 3743198

(43) Veröffentlichungstag der Anmeldung: 28.06.89 Patentblatt 89/26

(84) Benannte Vertragsstaaten: AT BE CH DE ES FR GB GR IT LI NL SE

(71) Anmelder: **Herberts Gesellschaft mit beschränkter Haftung**
**Christbusch 25**
**D-5600 Wuppertal 2(DE)**

(72) Erfinder: **Ritter, Helmut, Prof.Dr.Dipl.-Chem.**
**Rotdornweg 37**
**D-5600 Wuppertal 1(DE)**

(74) Vertreter: **Türk, Gille, Hrabal**
**Bruckner Strasse 20**
**D-4000 Düsseldorf 13(DE)**

(54) **Verfahren zur Polymerisation oder Copolymerisation von radikalisch polymerisierbaren, in wässrigen Systemen gelösten oder dispergierten Monomeren unter Verwendung eines Radikalinitiators.**

(57) Die Initiierung der Polymerisation oder Copolymerisation radikalisch polimerisierbarer Monomerer erfolgt bisher unter Verwendung verschiedener Peroxide, deren Lagerung gefährlich sein kann; außerdem muß die Initiierung unter Ausschluß von Luftsauerstoff erfolgen. Das neue Verfahren soll ungefährlich und in Anwesenheit von Sauerstoff durchführbar sein.

Die Polymerisation oder Copolymerisation erfolgt in wäßrigen, gegebenenfalls lösungsmittelhaltigen Systemen unter Verwendung eines Radikalinitiators der in dem Polymerisationssystem in situ durch Zusatz eines Peroxid erzeugenden Enzyms und eines oder mehrerer Enzymsubstrate in Gegenwart von Sauerstoff und Zersetzung des dabei erzeugten Peroxids unter Radikalbildung hergestellt wird.

Herstellung von Beschichtungen.

EP 0 321 872 A2

Xerox Copy Centre

## Verfahren zur Polymerisation oder Copolymerisation von radikalisch polymerisierbaren, in wäßrigen Systemen gelösten oder dispergierten Monomeren unter Verwendung eines Radikalinitiators.

Gegenstand der Erfindung ist ein Verfahren zur Polymerisation oder Copolymerisation von radikalisch polymerisierbaren, in wäßrigen Systemen gelösten oder dispergierten (insbesondere emulgierten) Monomeren unter Verwendung eines Peroxid erzeugenden Enzyms zur Bildung des Radikalinitiators in situ.

Die Initiierung der radikalischen Polymerisation erfolgt üblicherweise durch Verwendung von verschiedenen Peroxid-Derivaten, thermolabilen Azoverbindungen und Photoinitiatoren. Ausführlich beschrieben werden die Initiatoren z.B. in Houben Weyl (Bd. 14/1. 1961). Zur Beschleunigung der Startreaktionen werden die Peroxide in Kombination mit geeigneten Reduktionsmitteln, wie Metallsalze oder Amine, eingesetzt.

Obwohl die bisher bekannten Peroxid-Initiatorsysteme gute Ergebnisse liefern, bestehen dennoch einige Nachteile, deren Beseitigung wünschenswert ist. So ist bei der Herstellung und Lagerung von Peroxid-Initiatoren auf die Explosionsgefahr zu achten, wobei entsprechende Vorsichtsmaßnahmen einzuhalten sind. Anorganische Peroxide müssen ebenfalls von organischen Verbindungen getrennt gelagert werden, da ein Kontakt zu gefährlichen Reaktionen führen kann. Ein weiterer Nachteil für die bekannten Initiatorsysteme ist die Notwendigkeit der Verwendung von Inertgas oder entsprechend hoher Initiatormengen zur Beseitigung des störenden Luftsauerstoffs.

In der EP 126 394 werden aromatische Hydroxy- und Aminoverbindungen, die eine Wasserlöslichkeit von mindestens 0.01 mg/l haben, durch Zusatz von Peroxidasen und von äquimolaren Mengen Wasserstoffperoxid zu entsprechenden Oligomeren oxidiert, wie es auch von J.S. Dordick, Michael A. Marletta und Alexander M. Klibanov, Biotechnology and Bioengineering, Vol. 30 (1987, S. 32, Spalte 1, Zeile 25-32) beschrieben wird. Die Peroxidase erzeugt aus dem Wasserstoffperoxid molekularen Sauerstoff, jedoch keine Radikale. Verbindungen dieser Art sind für die Herstellung von nichtvergilbenden Polymeren mit hohem Molekulargewicht nicht geeignet. T. Ouchi und Mitarbeiter beschreiben im Polymer Journal, Vol. 13 (1981), Nr. 1, Seite 7-12 und Journal Macromol. Sci. - Chem., A 12 (10) (1978, S. 1523-1547) Vinylpolymerisationen mit speziellen Enzymen, die keine Peroxid erzeugenden Enzyme sind, die mit Kupfer-II-Ionen und Harnstoffverbindungen bei Temperaturen von ca. 85 °C aktiviert werden, jedoch keinen hohen Umsatzgrad erreichen und gefahrlos in Anwesenheit von Sauerstoff eingesetzt werden können.

Die Aufgabe der vorliegenden Erfindung bestand darin, ein Initiatorsystem bereitzustellen, das die genannten Nachteile der bisherigen Initiatorsysteme nicht beinhaltet und gefahrlos in Anwesenheit von Sauerstoff eingesetzt werden kann.

Die Aufgabe wurde überraschend dadurch gelöst, daß man als Initiatorsystem ein geeignetes Peroxid erzeugendes Enzym mit einem oder mehreren Substraten verwendet, und das gebildete Peroxid beispielsweise mit einem Reduktionsmittel zersetzt.

Im Sinne der Erfindung geeignete Enzyme sind solche, die mit einem geeigneten, eine CHOH-Gruppe enthaltenden Substrat durch Reaktion mit Sauerstoff, besonders Luftsauerstoff, Peroxid, bevorzugt Wasserstoffperoxid bilden. Geeignete Enzyme sind Oxidasen wie beispielsweise Lactatoxidase, Galactoseoxidase, L-2-Hydroxysäureoxidase, Glucoseoxidase, Glycolatoxidase, Hexoseoxidase, L-Gulonolactonoxidase, L-Sorboseoxidase oder Pyridoxol-4-oxidase. Die Enzyme werden allein oder im Gemisch erfindungsgemäß in Kombination mit einem jeweils für das Enzym geeigneten Substrat eingesetzt.

Als Substrate sind beispielsweise Substanzen aus den folgenden Gruppen geeignet:

a) Hydroxysäuren, wie Hydroxyessigsäure, Milchsäure oder Hydroxybuttersäure;

b) Zucker und Zuckerderivate, wie Galactose, Glucose, Glycoside, acetylierte Glucose oder Galactose, Disaccharide, Trisaccharide, Polysaccharide, Sorbit, Glycolat, L-Gulono-$\gamma$-lacton, L-Sorbose oder Pyridoxol;

c) Aminosäuren, wie Glycin, Alanin, Methionin, Lysin oder Cystein, ferner Peptide oder Glycoproteine.

Ein weiteres verwendbares Enzym ist Alkoholoxidase. Diese wird insbesondere mit Alkoholen, wie Methanol, Ethanol, n-Propanol, n-Butanol, Allylalkohol, Benzylalkohol, Ethylenglycol oder Butylglycol eingesetzt.

Beim erfindungsgemäßen Verfahren wird durch Zusatz von Enzym und Enzymsubstrat zu dem zu polymerisierenden System in Gegenwart von Luftsauerstoff ein Peroxid, insbesondere Wasserstoffperoxid gebildet. Um dieses Peroxid als Radikalinitiator ausnutzen zu können, wird nach dessen Bildung ein geeigneter radikalischer Zerfall eingeleitet. Dies ist beispielsweise möglich durch den Zusatz wirksamer Mengen von Reduktionmitteln. Geeignete Beispiele hierfür sind:

a) wasserlösliche Metallsalze in ihren niedrigen Wertigkeitsstufen, wie Eisen-II- oder Kobalt-II- oder Kupfer-I-Salze, z.B. Eisen-II-chlorid,

b) reduzierende Stickstoffverbindungen wie Hydroxylamin, Hydrazin und ihre Derivate, wie z.B. Natriumhydrazomethandisulfonat, aber auch Amine wie beispielsweise N,N-Diethylanilin, N,N-Dimethylanilin, N-Phenyldiethanolamin oder Trihexylamin,

c) Schwefel enthaltende Verbindungen wie beispielsweise Schwefeldioxid, Sulfit, Hydrogensulfit, Disulfit, Dithionit, Thiosulfat, Sulfoxylat, Formamidinsulfinsäure, Schwefelwasserstof, Merkaptane, Thiophenole und ihre Salze, aber auch Na-Hypophoshit,

d) organische reduzierende Verbindungen wie solche mit der Endiol-Gruppierung, beispielsweise Ascorbinsäure, Dihydroximaleinsäure, aber auch organische Sulfinsäuren.

Die Vinylpolymerisation findet bevorzugt in wässriger Lösung oder in einer Dispersion, z.B. in einer Emulsion (Öl in Wasser oder Wasser in Öl) statt; Bevorzugt ist die Emulsion Öl in Wasser. Als Lösemittel wird vorzugsweise Wasser verwendet, das gegebenenfalls noch ein organisches, in Wasser lösliches Lösemittel, wie Dimethylsulfoxid, Dimethylformamid, Tetrahydrofuran, in Wasser lösliche Alkohole oder Alkoholether wie beispielsweise Methanol, Ethanol, n-Propanol, iso-Propanol, n-Butanol, iso-Butanol, tert.-Butanol, Ethylenglykol, Ethylenglykolmonomethylether, Ethylenglykolmonoethylether, Ethylenglykolmonobutylether, Propylenglykolmonomethylether, Propylenglykolmonoethylether, Diethylenglykoldimethylether oder Aceton enthalten kann.

Als ethylenisch ungesättigte Monomere kommen praktisch alle radikalisch polymerisierbaren Monomeren in Frage, wobei jedoch die üblichen Einschränkungen für Copolymerisationen gelten, die durch das Q- und e-Schema nach Alfrey und Price bzw. die Copolymerisationsparameter vorgegeben sind (vgl. z.B. Brandrup und Immergut, Polymer Handbook, 2nd Edition, John Wiley und Sons, New York, 1975).

Bevorzugt werden solche ungesättigten Verbindungen, z.B. Acrylverbindungen, deren Löslichkeit in Wasser mindestens 0,1 g pro 100 g Wasser, bevorzugt mindestens 1 g pro 100 g Wasser allein oder im Gemisch beträgt. Monomere mit schlechterer Wasserlöslichkeit werden bevorzugt im Gemisch mit wasserlöslichen Monomeren oder unter Zusatz von anionischen, kationischen oder nichtionischen Emulgatoren eingesetzt. Geeignete ungesättigte Vinylverbindungen sind beispielsweise

a) $\alpha$, $\beta$-ungesättigte Mono- oder Dicarbonsäuren, wie Maleinsäure, Fumarsäure, Acrylsäure, Methacrylsäure, Itaconsäure,

b) $\alpha$, $\beta$-ungesättige Carbonsäureamide wie Maleindiamid, Maleinsäuremonoamid, Fumarsäurediamid, Acrylsäureamid, Methacrylsäureamid, Itaconsäureamid und deren Umsetzungsprodukte mit Formaldehyd, gegebenenfalls auch die entsprechenden Ether mit niedrigen Monoalkoholen, wie z.B. Methanol, aber auch Diacetonacrylamid- oder Methylacrylamidoglykolatmethylether, sowie cyclische Imide, wie Maleinimid und N-substituierte Maleinimide, z.B. N-Phenyl-maleinimid,

c) einpolymerisierbare, hydroxylgruppenhaltige Monomere die außer einer polymerisierbaren ethylenisch ungesättigten Gruppe noch mindestens eine Hydroxygruppe an einem Kohlenwasserstoffgerüst enthalten. Es sind hauptsächlich ungesättigte Veresterungsprodukte der allgemeinen Formel

$R''-CH=CR'-X-R'''$

worin $R' = -H$ oder $-C_nH_{2n+1}$;

$R'' = R'$ oder $-CXC_n H_{2n+1}$' $R'''$ = eine lineare oder verzweigte $C_{1-6}$-Alkylgruppe mit 1 - 3 OH-Gruppen, und X = -COO- oder -CONH-,

wobei n = 1 bis 6, bevorzugt 1 ist.

Besonders geeignet sind (Meth)acrylsäure-hydroxyalkylester wie $\beta$-Hydroxyethylacrylat, $\beta$-Hydroxypropylmethacrylat, 1,4-Butandiol-4-monoacrylat, Propylenglykolmonoacrylat, 2,3-Dihydroxypropylmethacrylat, Pentaerythrit-monomethacrylat, Polypropylenglykol-monoacrylat oder auch Fumarsäure-dihydroxyalkylester, deren lineare, verzweigte oder cyclische Alkylgruppe 2 bis 20 Kohlenstoffatome enthält. Es können jedoch auch N-Hydroxyalkyl(meth)acrylamide oder N-Hydroxyalkyl-fumarsäuremono- oder -diamide, wie N-Hydroxyethyl-acrylamid oder N-(2-Hydroxypropyl)methacrylamid eingesetzt werden. Besonders elastische Eigenschaften sind beim Einsatz eines Reaktionsprodukts von Hydroxyalkyl-(meth)acrylat mit $\epsilon$-Caprolacton zu erhalten.

d) aminogruppenhaltige Monomere werden Monomere der allgemeinen Formel

$R-CH=CR'-X-A-N(R'')_2$

wobei

$R = -R'$ oder $-X-C_nH_{22n+1}$

$R' = -H$ oder $-C_nH_{2n+1}$

$R'' = -R'$, $-C_nH_{2n}OH$ und/oder $-C_nH_{2n}NR_2$
$X = -COO-, -CONH-,$

$$A = -C_nH_{2n}- \text{ oder } -C_nH_{2n}-\underset{OH}{\underset{|}{CH}}-CH_2- \text{ und}$$

n = 1 bis 8, bevorzugt 1 bis 3 bedeuten.
Beispiele für ungesättigte N-gruppenhaltige Monomere sind N-Dialkyl- oder N-Monoalkyl-aminoalkyl(meth)-acrylate wie beispielsweise N-Diethylaminoethylmethacrylat oder N-tert-Butylaminoethylacrylat oder die entsprechenden N-Alkanol-Verbindungen, N-Dialkyl- oder N-Monoalkylaminoalkyl(meth)acrylamid, wie beispielsweise N-Dimethylaminoethylacrylamid oder die entsprechenden N-Alkanol-Verbindungen und/oder Vinylgruppen enthaltende heterocyclische Verbindungen mit einem oder mehreren basischen Stickstoffatomen wie beispielsweise N-Vinylimidazol.

e) radikalisch polymerisierbare Monomere, die keine weiteren reaktiven Gruppen enthalten, deren Auswahl nach den mechanischen Eigenschaften des Films und der Verträglichkeit der dabei eingesetzten Harzkombination erfolgen kann. Es werden Acrylsäure-alkylester, Methacrylsäure-alkylester, Maleinsäure- und/oder Fumarsäuredialkylester eingesetzt, wobei die Alkylreste aus 1 bis 20 Kohlenstoffatomen bestehen und in linearer oder verzweigter aliphatischer Kette und/oder als cycloaliphatischer und/oder (alkyl)-aromatischer Rest angeordnet sind. "Harte" Monomere mit einer hohen Glasübergangstemperatur als Polymere sind beispielsweise Monomere vom Vinylaromatentyp wie Styrol, α-substituierte Styrole wie α-Methylstyrol, o-, m- und p-Alkylstyrole wie Vinyltoluol oder p-tert-Butylstyrol, halogenierte Vinylbenzole, wie o- oder p-Chlorstyrol, Methacrylsäureester mit kurzer Kette, wie Methylmethacrylat, Ethylmethacrylat, Propylmethacrylat, Butylmethacrylat, Cyclohexylmethacrylat, Isobornyl-methacrylat, Dihydrodicyclopentadienyl- methacrylat, (Meth)acrylamid und/oder auch (Meth)acrylnitril. "Weiche" Monomere sind dagegen Acrylsäureester mit einer langen Alkoholkette wie n-Butylacrylat, Isobutylacrylat, tert.-Butylacrylat, 2-Ethylhexylacrylat und/oder Laurylacrylat. Es können auch ungesättigte Ether, wie Ethoxyethylmethacrylat oder Tetrahydrofurfurylacrylat eingesetzt werden.

Monomere vom Vinylestertyp, vorzugsweise Vinylester α-verzweigter Monocarbonsäuren, besonders der Versaticsäurevinylester oder auch N-Vinylpyrrolidon können auch einpolymerisiert werden, wenn geeignete Reaktionsbedingungen und Reaktionscomonomere ausgewählt werden.

Die Vinylmonomeren können für sich alleine verwendet werden oder aber auch kombiniert zur Herstellung von Copolymeren eingesetzt werden. Darüber hinaus können auch gegebenenfalls bifunktionelle Comonomere wie Methylen-bis-acrylamid oder Oligoethylenglykol-bis-acrylamid als Vernetzer in Mengen von 0,1 bis 30 Gew.-%, vorzugsweise 1-5 Gew.-%, bezogen auf die Gesamtmenge der Monomeren, verwendet werden.

Die zu polymerisierenden Monomeren werden mit der katalytischen Menge des Enzyms und der erforderlichen Menge des jeweiligen Enzymsubstrats gegebenenfalls unter Rühren gut vermischt. Katalytische Enzymmengen werden so niedrig wie möglich gewählt. Die untere Grenze liegt bei 1 Unit pro 10g Monomer. Bevorzugt ausgewählte Konzentrationen liegen zwischen 50 Units und 1000 Units pro 10 g. Eine Enzymeinheit (Unit) ist die Menge an Enzym, die die Umsetzung eines Mikromols Substrat pro Minute unter Standardbedingungen (z.B. für Glucoseoxidase 25 °C und pH-Wert 7) katalysiert. Die Substratmenge hängt von dem jeweiligen Enzym und der speziellen Natur des Substrats ab. Im allgemeinen werden etwa 0,2 bis 15 Gew.-% Enzymsubstrat, bezogen auf die Monomere, bevorzugt etwa 0,5 bis 10 Gew.-% eingesetzt. Um die für die Polymerisationsreaktion notwendige Menge an Wasserstoffperoxid zu bilden, muß bei Temperaturen von 5-60 °C, bevorzugt 20-40 °C bei niedriger Enzymkonzentration längere Zeit Sauerstoff in das Reaktionsgut eingerührt werden. Die Monomerenkonzentration in den Lösungen bzw. Emulsionen beträgt vorzugsweise bis zu 60 Gew.-%, bevorzugt 10-50 Gew.-% oder besonders bevorzugt 25-40 Gew.-%.

Die Monomeren können wahlweise sowohl während oder nach abgeschlossener enzymatischer Reaktion zugesetzt werden, wobei darauf zu achten ist, daß der pH-Wert sich nicht verändert.

Die Polymerisation setzt ein, wenn nach Zugabe von Enzym und Enzymsubstrat die Reaktion durch Reduktionsmittel allein oder in Mischung beschleunigt wird. Das Reduktionsmittel kann unmittelbar zusammen mit Enzym und Enzymsubstrat in das Reaktionsmedium eingemischt werden oder vorteilhafterweise nach dem Einmischen von Enzym und Enzymsubstrat zugesetzt werden. Hierzu verwendet man beispielsweise eine Lösung des Reduktionsmittels in dem Reaktionsmedium oder einem Bestandteil desselben. Um

einen Überzug zu erzielen, ist es auch möglich, eine Lösung des Reduktionsmittels auf die zu polymerisierende flüssige Schicht aufzusprühen.

Die zu verwendende Menge des Reduktionsmittels hängt von dessen Natur ab. Sie muß das in dem Reaktionsmedium gebildete Peroxid, z.B. Wasserstoffperoxid, wirksam unter Radikalbildung zersetzen. Die Konzentration beträgt etwa 0,001 bis zu 10 Gew.-% bevorzugt 0,01 bis 5 Gew.-%. Es wird eine möglichst niedrige Menge angestrebt. Die Reaktionsmasse härtet je nach Konzentration nach Zusatz des Reduktionsmittels im allgemeinen innerhalb weniger Sekunden bis zu mehreren Stunden bei Raumtemperatur aus.

In dem Reaktionsgemisch können außerdem noch weitere Additive vorhanden sein. Geeignete Additive im Sinne der vorliegenden Erfindung sind UV-Schutzmittel, Farbstoffe, anorganische oder organische Pigmente, Silikonöle, Tenside, Fungizide, Bakterizide, Füllstoffe, wie Kreide, Kaolin, Silikate, Ruß oder Metallpartikel.

Die gebildeten Polymerisate, z.B. Überzüge, können, insbesondere wenn von Vinylmonomeren mit weiteren vernetzbaren/kondensierbaren oder polymerisierbaren Gruppen ausgegangen wurde, weiter gehärtet werden, z.B. durch Temperaturerhöhung oder Einbrennen von z.B. N-Methylolacrylamid.

Die radikalische Vinylpolymerisation nach Herstellung des Initiators unter enzymatischer Beteiligung kann erfindungsgemäß zum Beschichten von metallischen oder nichtmetallischen Körpern vorzugsweise verwendet werden; weitere Anwendungsbereiche sind die Bereitung von Mikrogelen für die Anstrichmittelindustrie oder Gelmassen für den Dentalbereich, zur Herstellung von Formmassen oder Abdrücken, z.B. von archäologischen Funden oder biologischen Präparaten, zur Herstellung von Kunstgegenständen und zur Bereitung von Nährböden für die Kultivierung von Mikroorganismen, wie Bakterien und Pilzen.

Die erfindungsgemäße initierte Polymerisation weist den Vorteil auf, daß sie durch Anwesenheit von Luftsauerstoff bei niedrigen Temperaturen angeregt wird und den Einsatz gefährlicher und umweltschädlicher Initiatoren vermeidet.

In den folgenden Beispielen wird die Erfindung näher erläutert.

Als Glucose wurde jeweils D Glucose eingesetzt.

Beispiel 1:

2,4 g Acrylamid und 0,3 g Glucose werden in 10 ml Wasser gelöst, anschließend mit 14 mg Glucoseoxidase versetzt und 10 min. gerührt. Schließlich werden der Reaktionsmischung bei 20 °C 100 mg $FeCl_2$ zugefügt und das resultierende Polymer wird nach 15 min. aus Aceton gefällt. Ausbeute an Polyacrylamid : 40 %.

Beispiel 2:

3,8 g 2-Hydroxyethylacrylat und 0,3 g Glucose werden in 10 ml Wasser gelöst, mit 14 mg Glucoseoxidase versetzt und bei 20 °C 15 min. gerührt. Nach Zugabe von 100 mg $FeCl_2$ beginnt sofort eine starke Viskositätszunahme. Nach 15 minütiger Polymerisationszeit wird das vernetzte Polymer durch Waschen mit Aceton isoliert. Ausbeute an Polyhydroxyethylacrylat : 55 %.

Beispiel 3:

1,7 g Acrylamid und 1,6 g 2-Dimethylaminoethylmethacrylat werden in 10 ml Wasser gelöst, mit 0,3 g Glucose und 14 mg Glucoseoxidase versetzt und bei 20 °C 15 min. gerührt. Danach werden 100 mg $FeCl_2$ zugegeben und das Copolymer wird nach 24 Stdn. aus Aceton gefällt. Ausbeute an Copolymer : 30 %.

Beispiel 4:

10 ml Wasser werden bei Raumtemperatur (22 °C) mit den nachstehend angegebenen Monomeren, 300 mg Glucose und 14 mg (ca. 500 Units) Glucoseoxidase versetzt und 5 min. gerührt. Dann werden 100 mg $FeCl_2$ zugesetzt. Das Polymer wird nach 15 min. in Methanol gefällt und bis zur Gewichtskonstanz getrocknet.

| Monomer (jeweils 0,033 mol) | | Ausbeute |
|---|---|---|
| Acrylamid | 2,4 g | 37,5 % |
| 2-Hydroxyethylacrylat | 3,82 g | 55 % |
| 2-Dimethylamino-ethyl-methacrylat | 5,19 g | 11 % |
| Acrylamid/2-Dimethylaminoethyl-methacrylat im Verhältnis: | | |
| 9 : 1 | | 4 % |
| 8 : 2 | | 9 % |
| 7 : 3 | | 28 % |

Beispiel 5-15

Analog zu den Beispielen 1-4 wurden die in der Tabelle VIII angegebenen Monomeren und Monomerenmischungen polymerisiert, bzw. copolymerisiert. In den Beispielen 5 bis 12 erhielt man Homopolymerisierte, in den Beispielen 13 bis 15 Copolymerisate.

Vergleichsversuch:

Es wurde wie im Beispiel 2 gearbeitet, anstelle von 100 mg $FeCl_2$ wurden jedoch 85 mg $CuCl_2$ x 4 $H_2O$ zugesetzt. Es wurde kein polymeres Produkt erhalten.

Beispiel 16:

3,8 g (0,033 mol) Acrylsäure- 2-hydroxyethylester werden mit 10 ml Wasser, 0,3 g Glucose und den in der Tabelle I angegebenen Mengen D-Glucoseoxidase versetzt. Nach 10 min. "Vorlauf" werden die nachstehenden Mengen $FeCl_2$ zum Reaktionsgemisch gegeben. 10 min. später wird das gelierte Produkt mit 250 ml Aceton versetzt, um Wasser und eventuell vorhandenes Monomer auszuwaschen. Unter Vorlaufzeit versteht man die für die $H_2O_2$-Bildung notwendige Zeit vor der Monomerenzugabe.

Tabelle I

| mg (Units) Glucoseoxidase | 8,5 mg (1000) | 6,375 mg (750) | 4,25 mg (500) | 2,125 mg (250) |
|---|---|---|---|---|
| mg $FeCl_2$ | 100 mg | 75 mg | 50 mg | 25 mg |
| Ausbeute (%) | (63,68 %) | (51,57 %) | (56,84 %) | (90,26 %) |
| Zeit bis zur Gelierung | <1 sec. | <1 sec. | 1 sec. | 1 sec. |

Bei der Blindprobe ohne Enzym wurde kein Umsatz (keine Gelierung) festgestellt.

Beispiel 17:

Die in der nachfolgenden Tabelle II angegebene Menge 2-Hydroxyethylacrylat wird mit 10 ml Wasser versetzt. 0,3 g Glucose und 0.212 mg (25 Units) Glucoseoxidase werden zugesetzt. Nach 10 min. "Vorlauf" werden 25 mg $FeCl_2$ zum Reaktionsgemisch gegeben und die Zeit bis zur Vernetzung gemessen.

Tabelle II

| g Monomer | 3,8 g (27 Gew%) | 4,28 g (30Gew%) | 6,67 g (40 Gew%) | 10 g (50 Gew%) |
|---|---|---|---|---|
| Zeit bis zur Gelierung | 6 sec. | 7 sec. | ca. 10 min. | ca. 50 min. |

Beispiel 18:

3.8 g (0.033 mol) Hydroxyethacrylat werden mit 10 ml Wasser, 0.3 g D-Glucose und den in der Tab. III angegebenen Mengen D-Glucoseoxidase versetzt. Nach dem in Tab. III angegebenen "Vorlauf" werden 100 mg $FeCl_2$ x 4 $H_2O$ zum Reaktionsgemisch gegeben. Die Zeit bis zur Gelierung wurde gemessen.

Tabelle III

| | | | | | | | |
|---|---|---|---|---|---|---|---|
| mg Glucoseoxidase | 14 | 7 | 2 | 1 | 0,5 | 0,5 | 0,2 |
| "Vorlaufzeit" | 15 min | 15 min | 15 min | 15 min | 15 min | 45 min | 60 min |
| Zeit bis zur Gelierung | <1 sec. | <1 sec. | 1 sec. | 2 sec. | -*) | 2 sec. | 3 sec. |

*) keine Gelierung in 24 Stunden; lediglich Viskositätsanstieg

Beispiel 19:

3,8 g (0,33 mol) Hydroxyethylacrylat werden mit 10 ml Wasser, 0,3 g Glucose und 10 mg Glucoseoxidase versetzt. Nach 20 min "Vorlauf" werden die nachstehend genannten Mengen $FeCl_2$ x 4 $H_2O$ zum Reaktionsgemisch gegeben. Die Zeit bis zur Gelierung wird gemessen.

Tabelle IV

| | | | | | | | | |
|---|---|---|---|---|---|---|---|---|
| mg $FeCl_2$ x 4 $H_2O$ | 100 | 50 | 30 | 10 | 5 | 2 | 1 | 0,5 |
| Zeit bis zur Gelierung | <1 sec. | 1 sec. | 2 sec. | 3 sec. | 5 sec. | 12 sec. | 40 sec. | 4 h |

Beispiel 20:

3,8 g (0,033 mol) Hydroxyethylacrylat werden mit 10 ml Wasser, den nachstehenden Mengen Glucose und 10 mg Glucoseoxidase versetzt. Nach 10 min "Vorlauf" werden 100 mg $FeCl_2$ x 4 $H_2O$ zum Reaktionsgemisch zugesetzt. Die Zeit bis zur Gelierung wird gemessen

Tabelle V

| | | | | | | | |
|---|---|---|---|---|---|---|---|
| mg Glucose | 300 | 200 | 100 | 50 | 20 | 15 | 10 |
| Zeit bis zur Gelierung | <1 sec. | 2 sec. | 2 sec. | 2 sec. | 4 sec. | -*) | - |

*) keine Gelierung in 24 Stunden, lediglich leichter Viskositätsanstieg

Beispiel 21:

3,8 g Hydroxyethylacrylat, 0,3 g Glucose, 10 mg Glucoseoxidase und 10 ml auf nachstehende Temperaturen temperiertes Wasser werden 10 min bei der genannten Temperatur gerührt. Dann werden 100 mg $FeCl_2$ x 4 $H_2O$ zugesetzt.

Tabelle VI

| Temperatur (°C) | +5 | +20 | +40 | +60 | +80 |
|---|---|---|---|---|---|
| Polymerisation | ja | ja | ja | ja | nein |

Beispiel 22:

3,8 g Hydroxyethylacrylat, 0,3 g Glucose, 10 mg Glucoseoxidase und 10 ml Wasser werden 10 min bei 20 °C gerührt, dann auf nachstehend genannte Temperaturen gebracht und anschließend mit 100 mg $FeCl_2$ x 4 $H_2O$ versetzt.

Tabelle VII

| Temperature (°C) | +5 | +20 | +40 | +60 | +80 |
|---|---|---|---|---|---|
| Polymerisation | ja | ja | ja | ja | ja |

Tabelle VIII

| Beispiel | Monomerenmischung | Emulgator | Reduktionsmittel |
|---|---|---|---|
| 5 | 4,0 g Hydroxyethylmethacrylat | - | 100 mg $FeCl_2$ x 4$H_2O$ |
| 6 | 4,0 g Butandiolmonoacrylat | - | " " |
| 7 | 4,0 g Diacetonacrylamid | - | " " |
| 8*) | 2,4 g Acrylsäure | - | 90 mg Ascorbinsäure |
| 9*) | 2,9 g Methacrylsäure | - | 90 " " |
| 10 | 3,0 g Ethylacrylat | 150 mg X | 100 mg $FeCl_2$ x 4 $H_2O$ |
| 11 | 3,0 g Methylmethacrylat | " | " " |
| 12 | 3,0 g Butylacrylat | " | " " |
| 13 | 3,4 g Hydroxyethylmethacrylat + 0,9 g Hydroxyethylacrylat | - | " " |
| 14 | 3,0 g N-Vinylpyrrolidon + 0,8 g Hydroxyethylacrylat | - | 100 mg $FeCl_2$ x 4 $H_2O$ |
| 15*) | 0,7 g Hydroxyethylacrylat + 0,3 g Acrylsäure + 1,2 g Ethylacrylat + 1,2 g Methylmethacrylat + 0,7 g Butylacrylat | 100 mg X<br>X: nichtionischer Emulgator auf Basis eines ehtoxylierten Sorbit-Derivates | 90 mg Ascorbinsäure |

*) Bei den Beispielen 8, 9, 15 wird die Monomerenmischung erst nach der Rührphase unmittelbar vor Zugabe der Ascorbinsäure zugesetzt.

## Ansprüche

1. Verfahren zur Polymerisation oder Copolymerisation von radikalisch polymerisierbaren, in wäßrigen, gegebenenfalls lösungsmittelhaltigen Systemen gelösten oder dispergierten Monomeren, unter Verwendung eines Radikalinitiators, **dadurch gekennzeichnet,** daß der Radikalinitiator in dem Polymerisationssystem in situ durch Zusatz eines Peroxid erzeugenden Enzyms und eines oder mehrerer Enzymsubstrate in Gegenwart von Sauerstoff, und Zersetzung des erzeugten Peroxids unter Radikalbildung, hergestellt wird.

2. Verfahren nach Anspruch 1, dadurch gekennzeichnet, daß als Peroxid erzeugendes Enzym eine Oxidase eingesetzt wird.

3. Verfahren nach Anspruch 1 oder 2, dadurch gekennzeichnet, daß als Enzym/Enzymsubstrat-Gemisch Glucoseoxidase/Glucose verwendet wird.

4. Verfahren nach Anspruch 1, 2 oder 3, dadurch gekennzeichnet, daß die Zersetzung des erzeugten Peroxids durch Zusatz eines Reduktionsmittels erfolgt.

5. Verwendung des Verfahrens nach einem der vorhergehenden Ansprüche zur Herstellung von Beschichtungen.